# EUROPÄISCHE PATENTSCHRIFT

(11) **EP 2 621 748 B1**
(45) Veröffentlichungstag und Bekanntmachung des Hinweises auf die Patenterteilung: **31.12.2014**
(21) Anmeldenummer: 11748545.8
(22) Anmeldetag: 22.07.2011
(51) Int. Cl.: B60K 15/04

(54) **EINFÜLLSTUTZEN**
FILLER NECK
BUSE DE REMPLISSAGE

(30) Priorität: 28.09.2010 AT 16172010
(43) Veröffentlichungstag der Anmeldung: 07.08.2013
(73) Patentinhaber: Alutech Gesellschaft m.b.H., 5651 Lend (AT)
(72) Erfinder: MANSOURIFARD, Bahram, NL-2222 AK Katwijk (NL); LIEFAARD, Wout, NL-3421 XB Oudewater (NL)
(74) Vertreter: Weiser, Andreas
(86) Internationale Anmeldenummer: PCT/AT2011/000312
(87) Internationale Veröffentlichungsnummer: WO 2012/040748

(56) Entgegenhaltungen:
- EP-A2- 1 081 034
- DE-A1- 2 607 560
- DE-C1- 19 812 079
- US-A- 2 514 504
- US-A- 3 514 129

## Beschreibung

Die vorliegende Erfindung betrifft einen Einfüllstutzen zur Montage an einer Öffnung einer Tankwandung, umfassend einen mit seiner Stirnseite auf den Rand der Öffnung aufsetzbaren Stutzenteil mit Schnapphaken zum Hintergreifen des Öffnungsrands. Die Erfindung betrifft ferner einen Fahrzeugtank, der mit einem derartigen Einfüllstutzen ausgestattet ist.

Für die Verankerung von Einfüllstutzen an Tanks gibt es derzeit verschiedenste Lösungen, sei es mit Schraubgewinden, eingepreßt, eingeschweißt oder mittels Schnapphaken oder einem Bajonettverschluß verankert. Die bekannten Konstruktionen erfordern entweder ein Verdrehen des Stutzenteils gegenüber der Tankwandung, was stets eine flache Tankwandung voraussetzt, oder gesonderte Montagevorgänge wie Schweißen oder Kleben.

Die US 3 514 129 zeigt eine lösbare Klemmvorrichtung für eine Rohrdurchführung eines Tanks, bei welcher Keilnocken eines äußeren, auf der Tanköffnung aufliegenden Rings Schnapphaken eines inneren, am Rohr abgestützten Rings hintergreifen und diese beim Verdrehen des äußeren Rings in der Tanköffnung verriegeln.

Die Erfindung setzt sich zum Ziel, einen Einfüllstutzen zu schaffen, welcher besonders einfach zu montieren ist und auch für gekrümmte Tankwandungen geeignet ist.

Dieses Ziel wird mit einem Einfüllstutzen gemäß den Merkmalen des Anspruchs 1 erreicht, welcher sich gemäß der Erfindung durch einen im Stutzenteil verdrehbaren rohrförmigen Innenteil auszeichnet, der auf seiner Außenseite Verriegelungsnocken trägt, welche beim Verdrehen die Schnapphaken radial nach außen halten und dadurch verriegeln.

Auf diese Weise wird ein Einfüllstutzen geschaffen, der durch eine einfache Drehbewegung seines Innenteils an der Tanköffnung rasch und dicht verankert werden kann. Der auf der Tankwandung aufliegende Stutzenteil bleibt dabei drehfest, so dass der Einfüllstutzen auch an nicht-ebenen Tankwandungen mon-tiert werden kann. Demgemäß zeichnet sich eine besonders bevorzugte Ausführungsform des Einfüllstutzens für die Montage an einer Öffnung einer gekrümmten Tankwandung auch dadurch aus, dass die Stirnseite des Stutzenteils an die Krümmung der Tankwandung angepaßt ist.

Besonders günstig ist es, wenn die Verriegelungsnocken an ihrem Außenumfang Vertiefungen haben, in welchen die Schnapphaken beim Verdrehen des Innenteils einrasten. Dadurch kann das Wiederlösen des Einfüllstutzens vom Tank erschwert oder sogar dauerhaft verhindert werden, so dass eine unlösbare Verankerung geschaffen wird.

Gemäß einem weiteren bevorzugten Merkmal der Erfindung kann der Innenteil über Bajonettnuten, in welche Ansätze des Stutzenteils eingreifen, oder über Ansätze, welche in Bajonettnuten des Stutzenteils eingreifen, verdrehbar im Stutzenteil gehalten werden. Dies schafft eine Verliersicherung für den Innenteil während des Montagevorgangs: Der Stutzenteil kann so mit vormontiertem Innenteil auf die Öffnung aufgesetzt und durch Verdrehen des Innenteils montiert werden, ohne dass die Gefahr besteht, dass der Innenteil versehentlich in den Tank fällt.

Darüber hinaus bietet diese Ausführungsform die weitere Möglichkeit, dass der Innenteil auf seiner Außenseite zusätzlich Haltenocken zum Bajonettengriff in eine bajonettartig ausgesparte Öffnung trägt. Der Innenteil kann auf diese Weise in der Art eines Bajonettverschlusses in die Öffnung eingreifen, um die Verankerung zu verstärken. Bevorzugt liegen dabei die Haltenocken jeweils mit gleichen Abständen zwischen den Verriegelungsnocken, um eine gleichmäßige Anpressung des Einfüllstutzens auf den Öffnungsrand zu erzeugen.

Beim Einsatz an gekrümmten Tankwandungen hat die Verwendung eines im Stutzenteil verdrehbar gehaltenen Innenteils, der mit Haltenocken ausgestaltet ist, den zusätzlichen Vorteil, dass beim Verdrehen des Innenteils die Haltenocken die gekrümmte Innenseite des Öffnungsrands hinaufgleiten und so den Stutzenteil zunehmend gegen die Außenseite des Öffnungsrands pressen. Auf diese Weise wird die Abdichtung zwischen der Stirnseite des Stutzenteils und dem Öffnungsrand noch weiter verstärkt.

Bevorzugt wird dazu die Stirnseite des Stutzenteils zusätzlich mit einer Ringdichtung zur Anlage auf dem Öffnungsrand ausgestattet, was eine noch bessere Abdichtung ergibt.

Der Innenteil des Einfüllstutzens kann optionale Zusatzeinrichtungen wie eine Rückschlagklappe, ein Einfüllsieb oder eine Diebstahlssicherung lagern. Auf diese Weise können verschiedentlich ausgestaltete Innenteile modular mit Stutzenteilen für verschiedene Tanks kombiniert werden.

In einem weiteren Aspekt schafft die Erfindung einen Fahrzeugtank, der mit einem Einfüllstutzen der geschilderten Art ausgerüstet ist. Insbesondere wird bei einem Fahrzeugtank mit einer zumindest abschnittsweise gekrümmten Tankwandung, dessen Öffnung zumindest teilweise in einem der Krümmungsbereiche liegt, die Stirnseite des Stutzenteils an die lokale krümmung der Tankwandung angepaßt.

Die Erfindung wird nachstehend anhand eines bevorzugten Ausführungsbeispiels unter Bezugnahme auf die begleitenden Zeichnungen näher erläutert, in denen zeigen:
Fig. 1 einen Fahrzeugtank mit einem Einfüllstutzen gemäß der Erfindung in einer Perspektivansicht;
Fig. 2 die Öffnung in der Wandung des Tanks von Fig. 1, in welcher der Einfüllstutzen verankert wird, in einer Draufsicht;
die Fig. 3 und 4 den Stutzenteil des Einfüllstutzens der Erfindung in einem Axialschnitt und in einer Schrägansicht von oben;
Fig. 5 den Innenteil des Einfüllstutzens der Erfindung in einer Schrägansicht von oben;
Fig. 6 eine Schnittansicht des in der Wandungsöffnung endmontierten Einfüllstutzens entlang der Schnittebene VI - VI von Fig. 5; und
Fig. 7 eine Schnittansicht des Einfüllstutzens von Fig. 6 entlang der Schnittebene VII - VII.

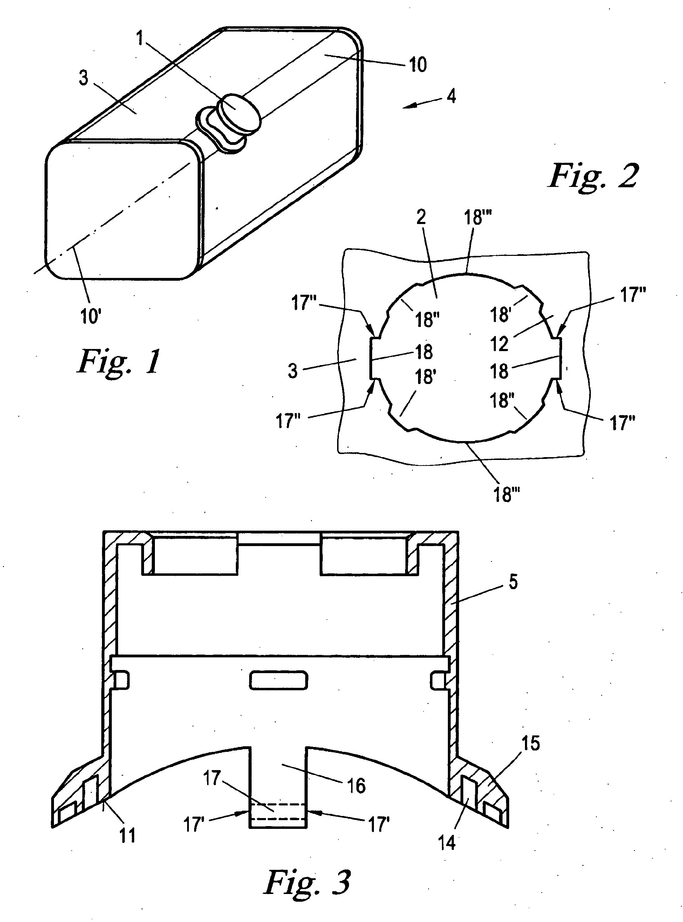

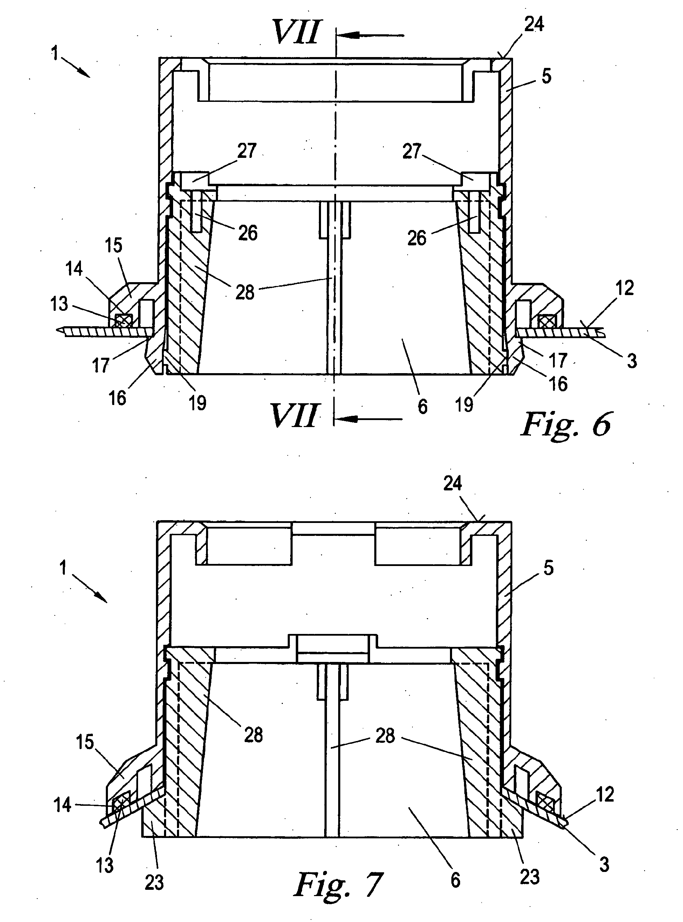

In den Fig. 1 bis 7 ist ein Einfüllstutzen 1 gezeigt, der an einer Öffnung 2 in der Wandung 3 eines (nur ausschnittsweise dargestellten) Tanks 4 montiert ist. Der Tank 4 ist beispielsweise ein Kraftstofftank für einen Lastkraftwagen und bevorzugt aus dünnwandigem Aluminiumblech gefertigt. Es versteht sich, dass der Einfüllstutzen 1 nicht nur zum Füllen, sondern auch zum Leeren des Tanks 4 oder den Einbau von Messleitungen, Sensoren, als Lüftung usw. verwendet werden kann.

Der Einfüllstutzen 1 setzt sich im Wesentlichen aus einem äußeren Stutzenteil 5 und einem darin etwa koaxial aufgenommenen ring- bzw. rohrförmigen Innenteil 6 zusammen. Der Innenteil 6 ist im Stutzenteil 5 zumindest über einen begrenzten Winkelbereich, z.B. 90°, verdrehbar und bevorzugt - auch wenn dies in vereinfachten Ausführungsformen nicht zwingend ist - während seines Verdrehens in Axialrichtung gehalten. Zu diesem Zweck sind auf der Außenseite 7 des Innenteils 6 abschnittsweise Bajonettnuten 8 (hier vier Stück) ausgebildet, in welche Ansätze 9 des Stutzenteils 5 eingreifen, sodass bei der Montage der Innenteil 6 bajonettverschlußartig in den Stutzenteil 5 zuerst in Axialrichtung eingesteckt und dann verdreht werden kann, bzw. umgekehrt der Stutzenteil 5 auf den Innenteil 6. Es versteht sich, dass die Bajonettnuten 8 auch auf der Innenseite des Stutzenteils 5 und die Ansätze 9 auf der Außenseite des Innenteils 6 angeordnet werden könnten, oder dass eine andere Art der Verdrehlagerung und Verliersicherung zwischen Stutzenteil 5 und Innenteil 6 verwendet werden kann, z.B. Umfangsnuten mit darin eingreifenden Schnappwulsten od.dgl.

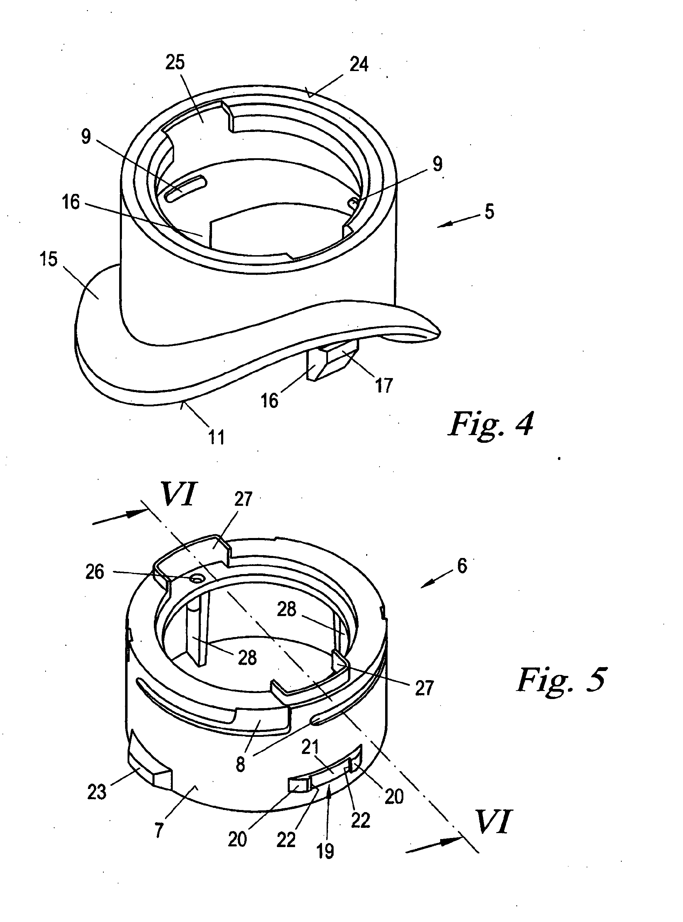

Wie in Fig. 1 dargestellt, kann die Öffnung 2 in einem Krümmungsbereich 10 der Tankwandung 3 liegen, z.B. in einem abgerundeten Eckbereich des Tanks 4. Dementsprechend ist die dem Tank 4 zugewandte eine Stirnseite 11 des Stutzenteils 5 komplementär an die lokale Krümmung des Krümmungsbereichs 10 der Tankwandung 3 angepaßt, siehe insbesondere Fig. 3 und 4. Der Stutzenteil 5 liegt daher mit seiner Stirnseite 11 formschlüssig auf dem außenseitigen Rand 12 der Öffnung 2 auf und ist in seiner Montagestellung drehfest.

Zwischen Stirnseite 11 und Öffnungsrand 12 kann eine Ringdichtung 13 zwischengelegt sein, welche beispielsweise von einer stirnseitigen Nut 14 eines verbreiteten Endbereichs 15 der Stirnseite 11 aufgenommen ist. Anstelle der oder bevorzugt zusätzlich zur Ringdichtung 13 kann die Stirnseite 11 des Stutzenteils 5 mit dem Öffnungsrand 12 verklebt oder verschäumt werden.

Die Montage bzw. Verankerung des Einfüllstutzens 1 an der Öffnung 2 gestaltet sich wie folgt.

Der Stutzenteil 5 ist im Bereich seiner Stirnseite 11 mit davon auskragenden Schnapphaken 16 ausgestattet. Die Schnapphaken 16 können den Öffnungsrand 12 federnd (einschnappend) hintergreifen, d.h. Rastvorsprünge 17 der Schnapphaken 16 liegen in der Montagestellung an der Innenseite des Öffnungsrands 12 an. Die Öffnung 2 kann erforderlichenfalls am Ort der Schnapphaken 16 mit Aussparungen 18 für deren leichteren Eintritt versehen serin. Dadurch liegen in der eingeschnappten Stellung der Schnapphaken 16 deren Seiten 17' auch an den Seitenkanten 17'' der Aussparungen 18 an, was eine Verdrehung des Stützenteils 5 auf den Tank 4 zusätzlich verhindert. Die Schnapphaken 16 sind bevorzugt gleichmäßig über den Umfang des Stutzenteils 5 verteilt.

Im gezeigten Beispiel sind zwei Schnapphaken 16 diametral angeordnet. Es versteht sich, dass auch drei, vier usw. Schnapphaken 16 verwendet werden können.

Zur Verriegelung der Schnapphaken 16 in ihrer Montage- bzw. Verrastungsstellung dienen Verriegelungsnocken 19 auf der Außenseite 7 des Innenteils 6, welche zunächst beim Einsetzen bzw. Einschnappen des Einfüllstutzens 1 in die Öffnung 2 von den Schnapphaken 16 freigestellt sind und anschließend beim Verdrehen des Innenteils 6 hinter die Schnapphaken 16 gleiten, um deren federnde Schnappbewegung zu blockieren, d.h. diese in ihrer Einraststellung zu verriegeln. Die Verriegelungsnocken 19 sind zum leichteren Eintritt hinter die Schnapphaken 16 - bzw. um diese fortschreitend nach außen zu pressen - mit abgeschrägten Rampen 20 versehen. Beim Verdrehen des Innenteils 6 wird der Bewegungsweg der Ansätze 9 in den Bajonettnuten 8 ausgenützt.

Die Verriegelungsnocken 19 können an ihrem Außenumfang bevorzugt Vertiefungen 21 haben, in welche die Schnapphaken 16 ihrerseits einrasten können. Wenn die Vertiefungen 21 an ihren seitlichen Begrenzungswänden 22 ohne Abschrägungen ausgebildet werden, rasten die Schnapphaken 16 unwiederbringlich in den Vertiefungen 21 ein, d.h. der Innenteil 6 kann nicht mehr zurückgedreht werden und der Einfüllstutzen 1 ist unlösbar am Tank 4 verankert.

Auf dem Innenteil 6 können (nicht dargestellte) federnde Elemente ausgebildet sein, welche zusätzlich oder anstelle der Verriegelungsnocken 19 vorgesehen sind, um federnd gegen die Rückseiten der Schnapphaken 16 zu pressen.

Die Rastvorsprünge 17 der Schnapphaken 16 können an ihrer der Tankwandung 3 bzw. dem Öffnungsrand 12 zugewandten Seite mit Rampen bzw. Abschrägungen versehen sein, auf welchen der Öffnungsrands 12 beim nach außen Schnappen bzw. Pressen der Rastvorsprünge 17 hochgleitet, was die Schnapphaken 16 und damit den Stutzenteil 5 gegen die Außenseite des Öffnungsrands 12 zieht. Dadurch wird die Abdichtung zwischen dem Stutzenteil 5 und der Tankwandung 3 erhöht.

Zur weiteren Verstärkung der Abdichtung kann der Innenteil 6 mit zusätzlichen Haltenocken 23 auf seiner Außenseite 7 ausgestattet werden. Die Haltenocken 23 greifen in der Art eines Bajonettverschlusses in eine entsprechend bajonettartig ausgesparte Öffnung 2 ein und kommen beim Verdrehen des Innenteils 6 an der Innenseite des Öffnungsrands 2 zur Anlage.

Die Haltenocken 23 können während des Einsteckens des vormontierten Einfüllstutzens 1 in die Öffnung 2, d.h. mit in Eingriff gebrachten Bajonettnuten 8 und Ansätzen 9, jedoch noch vor dem Verdrehen des Innenteils 6 zur Verriegelung der Schnapphaken 16, in Aussparungen 18' der Öffnung 2 eintreten; und die Verriegelungsnocken 19 in Aussparungen 18".

Diese Ausführungsform eignet sich besonders für eine gekrümmte Tankwandung 3, bei welcher sich die Haltenocken 23 beim Verdrehen des Innenteils 6, bis die Verriegelungsnocken 19 hinter die Schnapphaken 16 treten, fortschreitend der gekrümmten Innenseite der Tankwandung 3 annähern, bis sie in der endgültigen Verrastungsstellung der Schnapphaken 16 in Anlage an die Innenseite des Randes 12 kommen.

Es versteht sich, dass die zusätzliche Verankerung durch die Haltenocken 19 dann optimal ist, wenn - bei einer eindimensional gekrümmten Tankwandung 3 - zwei Schnapphaken 16 diametral zueinander und parallel zur Krümmungsachse 10' der Tankwandung 3 liegen und zwei Haltenocken 23 diametral in rechtem Winkel zu zwei diametralen Verriegelungsnocken 19 liegen, sodass im montierten Zustand die beiden Haltenocken 23 unter den Bereichen 18''' des Randes 12 in rechtem Winkel zu den beiden diametral in den Aussparungen 18 verrasteten Schnapphaken 16 liegen.

Auch im Falle einer ebenen Tankwandung 3 sind die Haltenocken 23 - wenn auch mit verringerter Anpreßwirkung - hilfreich, um eine zusätzliche Verankerung zu bieten; es versteht sich, dass sie dann nicht unterhalb der Schnapphaken 16, sondern auf gleicher Höhe wie diese liegen und dadurch beim Verdrehen des Innenteils 6 in ständiger Anlage an der Innenseite des Öffnungsrands 12 sind. In so einem Fall (oder bei mehrdimensional gekrümmten Tankwänden) können auch mehr als zwei Haltenocken 23 verwendet werden, welche bevorzugt mit gleichen Abständen zwischen den mehr als zwei Verriegelungsnocken 19 für mehr als zwei Schnapphaken 16 liegen.

Der Stutzenteil 5 kann an seiner der Öffnung 2 abgewandten Stirnseite 24 mit herkömmlichen Verankerungsmitteln für einen Stutzendeckel ausgestattet sein, z.B. mit einem Gewinde oder einer Bajonettnut 25.

Der Innenteil 6 kann Zusatzeinrichtungen lagern, z.B. eine Rückschlagklappe, ein Einfüllsieb und/oder eine Diebstahlsicherung, und dazu z.B. Bohrungen 26 für deren Verankerung darbieten. Aufgrund der Zweiteiligkeit des Einfüllstutzens 1 kann somit verschiedenste an unterschiedliche Tanks 4 angepasste Stutzenteile 5 modular mit Innenteilen 6 mit verschiedensten Zusatzeinrichtungen kombiniert werden.

Der Innenteil 6 kann ferner mit Mitteln zu seinem leichten Ergreifen bzw. Verdrehen ausgestattet sein, beispielsweise mit Aussparungen 27 und/oder Längsrippen 28 an seiner Innenseite für den Angriff eines Verdrehwerkzeugs. Die Längsrippen 28 können auch zur Versteifung dienen.

Der Einfüllstutzen 1 ist bevorzugt zur Gänze aus Kunststoffspritzgussteilen gebildet. Optional könnte der Stutzenteil 5 aus Metallblech, insbesondere Aluminiumblech, gefertigt und der Innenteil 6 aus Kunststoff gebildet sein, was mechanische Festigkeit mit einfachen Fertigungsmöglichkeiten kombiniert.

Die Erfindung ist nicht auf die dargestellten Ausführungsformen beschränkt, sondern ümfasst alle Varianten und Modifikationen, die in den Rahmen der angeschlossenen Ansprüche fallen.

## Patentansprüche

1. Einfüllstutzen (1) zur Montage an einer Öffnung (2) einer Tankwandung (3), umfassend einen mit seiner Stirnseite (11) auf den Rand (12) der Öffnung (2) aufsetzbaren Stutzenteil (5) mit Schnapphaken (16) zum Hintergreifen des Öffnungsrands (12), **gekennzeichnet durch** einen im Stutzenteil (5) verdrehbaren rohrförmigen Innenteil (6), der auf seiner Außenseite (7) Verriegelungsnocken (19) trägt, welche beim Verdrehen die Schnapphaken (16) radial nach außen halten und **dadurch** verriegeln.

2. Einfüllstutzen nach Anspruch 1 zur Montage an einer Öffnung (2) einer gekrümmten Tankwandung (3), **dadurch gekennzeichnet, dass** die Stirnseite (11) des Stutzenteils (5) an die Krümmung der Tankwandung (3) angepasst ist.

3. Einfüllstutzen nach Anspruch 1 oder 2, **dadurch gekennzeichnet, dass** die Verriegelungsnocken (19) an ihrem Außenumfang Vertiefungen (21) haben, in welchen die Schnapphaken (16) beim Verdrehen des Innenteils (6) einrasten.

4. Einfüllstutzen nach einem der Ansprüche 1 bis 3, **dadurch gekennzeichnet, dass** der Innenteil (6) über Bajonettnuten (8), in welche Ansätze (9) des Stutzenteils (5) eingreifen, oder über Ansätze, welche in Bajonettnuten des Stutzenteils (5) eingreifen, verdrehbar im Stutzenteil (5) gehalten ist.

5. Einfüllstutzen nach Anspruch 4, **dadurch gekennzeichnet, dass** der Innenteil (6) auf seiner Außenseite (7) zusätzlich Haltenocken (23) zum Bajonettengriff in eine bajonettartig ausgesparte Öffnung trägt.

6. Einfüllstutzen nach Anspruch 5, **dadurch gekennzeichnet, dass** die Haltenocken (23) jeweils mit gleichen Abständen zwischen den Verriegelungsnocken (19) liegen.

7. Einfüllstutzen nach einem der Ansprüche 1 bis 6, **dadurch gekennzeichnet, dass** die Stirnseite (11) des Stutzenteils (5) mit einer Ringdichtung (13) zur Anlage auf dem Öffnungsrand (12) ausgestattet ist.

8. Einfüllstutzen nach einem der Ansprüche 1 bis 7, **dadurch gekennzeichnet, dass** der Innenteil (6) Zusatzeinrichtungen wie eine Rückschlagklappe, ein Einfüllsieb oder eine Diebstahlssicherung lagert.

9. Fahrzeugtank, mit einer Tankwandung (3) und einer Öffnung (2) darin, an welcher ein Einfüllstutzen (1) nach einem der Ansprüche 1 bis 8 montiert ist.

10. Fahrzeugtank nach Anspruch 9, dessen Öffnung (2) in einem Krümmungsbereich (10) der Tankwandung liegt, wobei die Stirnseite (11) des Stutzenteils (5) an die lokale Krümmung der Tankwandung (3) angepasst ist.

## Claims

1. Filler neck (1) for installation at an opening (2) of a tank wall (3), comprising a neck piece (5) whose front face (11) is attachable onto an edge (12) of the opening, the neck piece (5) having a snap-hook (16) for engaging behind the opening edge (12), **characterized by** a tubular inner piece (6) which is rotatable in the neck piece (5) and has locking pins (19) on its outer side (7) which hold and thereby lock the snap-hooks (16) radially outward during rotation.

2. Filler neck according to claim 1 for mounting on an opening (2) of a curved tank wall (3), **characterised in that** the front face (11) of the neck piece (5) is adapted to the curvature of the tank wall (3).

3. Filler neck according to claim 1 or 2, **characterised in that** the locking pins (19) have recesses (21) on their outer circumference in which the snap-hooks (16) latch during rotation of the inner piece (6).

4. Filler neck according to any one of the claims 1 to 3, **characterised in that** the inner piece (6) is held rotatably in the neck piece (5) by means of bayonet recesses (8), in which projections (9) of the neck piece (5) latch, or by means of projections, which latch in bayonet recesses of the neck piece (5).

5. Filler neck according to claim 4, **characterized in that** the inner piece (6) additionally has holding pins (23) on its outer side (7) for bayonet coupling in a bayonet-like recessed opening.

6. Filler neck according to claim 5, **characterised in that** the holding pins (23) are each arranged at equal distances between the locking pins (19).

7. Filler neck according to any one of the claims 1 to 6, **characterised in that** the front face (11) of the neck piece (5) is equipped with an annular sealing gasket (13) for resting on the opening edge (12).

8. Filler neck according to any one of the claims 1 to 7, **characterised in that** the inner piece (6) mounts additional equipment such as a non-return valve, a filler sieve or an anti-theft device.

9. Vehicle tank with a tank wall (3) and an opening (2) therein, on which a filler neck (1) according to any one of the claims 1 to 8 is mounted.

10. Vehicle tank according to claim 9, whose opening (2) lies in a curvature area (10) of the tank wall, wherein the front face (11) of the neck piece (5) is adapted to the local curvature on the tank wall (3).

## Revendications

1. Tubulure de remplissage (1) destinée à être montée à une ouverture (2) d'une paroi de réservoir (3), comprenant une partie de tubulure (5) apte à être disposée avec son côté frontal (11) sur le bord (12) de l'ouverture (2), avec des crochets d'encliquetage (16) destinés à venir en prise derrière le bord (12) de l'ouverture, **caractérisée par** une partie intérieure tubulaire (6) apte à effectuer une rotation dans la partie de tubulure (5) et portant des ergots de verrouillage (19) sur son côté extérieur (7) qui maintiennent les crochets d'encliquetage (16) radialement vers l'extérieur lors de la rotation, tout en les verrouillant.

2. Tubulure de remplissage selon la revendication 1, destinée à être montée à une ouverture (2) d'une paroi de réservoir courbeé (3), **caractérisée en ce que** le côté frontal (11) de la partie de tubulure (5) est adapté à la courbure de la paroi de réservoir (3).

3. Tubulure de remplissage selon la revendication 1 ou 2, **caractérisée en ce que** les ergots de verrouillage (19) comportent des renfoncements (21) sur leur pourtour extérieur, dans lesquels s'enclenchent les crochets d'encliquetage (16) lors de la rotation de la partie intérieure (6).

4. Tubulure de remplissage selon l'une des revendications 1 à 3, **caractérisé en ce que** la partie intérieure (6) est maintenue de façon rotative dans la partie de tubulure (5), par des rainures de baïonnette (8) dans lesquelles s'engagent des saillies (9) de la partie de tubulure (5), ou par des saillies s'engageant dans des rainures de baïonnette de la partie de tubulure (5).

5. Tubulure de remplissage selon la revendication 4, **caractérisé en ce que** sur son côté extérieur (7), la partie intérieure (6) porte également des ergots de maintien (23) pour une prise à baïonnette dans une ouverture évidée à la façon d'une baïonnette.

6. Tubulure de remplissage selon la revendication 5, **caractérisée en ce que** les ergots de maintien (23) se situent entre les ergots de verrouillage (19) en respectant des espacements identiques.

7. Tubulure de remplissage selon l'une des revendications 1 à 6, **caractérisée en ce que** le côté frontal (11) de la partie de tubulure (5) est pourvu d'une bague d'étanchéité (13) destinée à s'appliquer sur le bord de l'ouverture (12).

8. Tubulure de remplissage selon l'une des revendications 1 à 7, **caractérisée en ce que** la partie intérieure (6) comporte des dispositifs supplémentaire, tels qu'un clapet de non-retour, un tamis de remplissage ou une sécurité antivol.

9. Réservoir de véhicule, avec une paroi de réservoir (3) et une ouverture (2) dans celle-ci, à laquelle est montée une tubulure de remplissage (1) selon l'une des revendications 1 à 8.

10. Réservoir de véhicule selon la revendication 9, dont l'ouverture (2) se trouve dans une région courbeé (10) de la paroi de réservoir, le côté frontal (11) de la partie de tubulure (5) étant adapté à la courbure locale de la paroi de réservoir (3).
